# EUROPEAN PATENT APPLICATION

(11) **EP 0 891 700 A1**
(43) Date of publication of application: **20.01.1999**
(21) Application number: 97305358.0
(22) Date of filing: 17.07.1997
(51) Int. Cl.: A01G 9/12

(54) **Supporting stems and foliage of plants**

(71) Applicant: Duszczak, George, Newbold, Chesterfield S40 4RY (GB)
(72) Inventor: Duszczak, George, Newbold, Chesterfield S40 4RY (GB)
(74) Representative: Middlemist, Ian Alastair

(57) **Abstract**

A base 10 supports a pot 21 or other container for a plant. One or more vertical supports 16 are carried over the container by means of one or more connecting members 13 which have ends 12 received in sockets 11 in the base 10. The members 13 extend from the side of the base 10, and around the side of the container to then extend over the container whereby the support 16 can be used to train or support a plant in a natural position, without penetration of the soil or root stock.

## Description

This invention relates to apparatus for supporting the stems and foliage of growing plants.

The problem of providing support for the stems and foliage of plants the rooting system of which are contained, with growing medium, in a pot or similar container and intended for ornamental use, or for visual appeal, has not so far been successfully addressed and overcome.

It is clearly unsatisfactory to insert a cane or similar support into the growing medium of the pot and tie the upper growth of the plant, since the cane will most probably damage the plant's roots in the pot. Canes are also unsatisfactory since they are limited in the depth to which they can penetrate to stabalise the plant as the plant grows and increases in weight.

A number of devices for supporting the upper growth of plants have been proposed , but these have generally been concerned with training the stems and foliage of crop plants such as tomatoes, grown in grow-bags.

In GB-A-2237964, a support frame is described with a base, which is adapted to hold a grow bag, and a frame carried above the base and the grow bag. The frame, which is disposed extending vertically above, and from side to side across the base, is strung with a net which is used to train the growing shoots of the tomato plant. This arrangement is unsuitable for ornamental plants because of the obtrusive nature of the support.

In GB-A-2263852, a base is intended to be inserted in a pot, below the rooting system of a plant, with a single pole support extending upwardly through the root system, to be disposed essentially parallel to and adjacent the main stem of the plant, because of the interference with the plant's root system, this apparatus can cause damage to the root system and is thus unsatisfactory.

GB 2286105 shows a plurality of side by side L-shaped members each comprising a base limb which is inserted below a grow bag, and an upright, which extends upwardly to one side of the bag. The stems of the plants growing in the grow bag are trained and tied , one to each upright. This arrangement which is suitable for crop plants such as tomatoes, is not suitable for ornamental plants, because the plants are distorted in growth by being trained to one side of the growth container.

An object of the invention is to provide apparatus for supporting the stems and foliage of the plants which will not be unsightly, or damage the roots system or distort the growing stem of the plant.

The invention accordingly provides apparatus for training and supporting the stems and foliage of plants growing in pots or like containers, comprising a base upon which a pot or like container may be placed, a substantially upright member for supporting the stems and foliage of a plant growing in the container, characterised in that the upright member is supported directly above the container, by means of a connecting part which extends up from a side of the base, and inwardly over the container.

By this means , the plant(s) is or are allowed to grow straight up from the container, without having to be trained to one side to be tied to and be supported by the supports; on the other hand the support is kept clear of the pot, the growing medium within the pot and the plant root system, so that there is no probability of damage or distortion either to the roots or the upper growth of the plant.

The upright member preferably comprises at least one rod, and each rod may comprise a plurality of sections connectable end to end to match the height or expected height of growth of the plant. Securing means may be provided at least one location on the or each rod for connection to a part of the growing plant.

The upright member may be connected to two symmetrical connecting parts, thereby straddling the base and the pot.

Each connecting part may be connected to one or more end parts each received in a respective socket in the base , the sockets being preferably horizontally disposed and extending eg radially of a circular base.

The base may be a circular, square, elliptical or rectangular member, dimensioned and shaped to seat a desired plant growing receptacle such as a pot, trough or the like, and the base may be formed with horizontal passages to provide one or more sockets for receiving the end parts of respective connecting members. One or more upright members, each having associated one or more connecting members, may be used for each plant grown in a pot or other receptacle.

In a preferred embodiment the base may be a polygonal member, eg a regular octagon, and each side of the octagon may be provided with a pair of spaced apart sockets extending inwards of the base orthogonally to the respective side. The sockets in one side of the octagon may receive the end parts of a pair of connecting members, which are both joined at their upper ends to the lower end of a single upright member, which is located over the at least approximate geometric centre of the base.

The securing means may each comprise a screw operable clamp or be spring loaded for clamping to any desired location on the upright member, carrying a hook which is adapted to engage a main or branch stem of the plant by receiving it or use of a tie member. A further possible clamp features a sleeve with resilient leaf springs.

The end parts of the connecting members may be slidable adjustably in position within said sockets, to accommodate pots or growing vessels of various dimensions. One or more support members may be used, disposed in dependance upon the shape of the plant.

The cross section of the sockets and end parts of the connecting members may be varied as required, and be eg circular, square, polygonal or cruciform.

Where there is only a single socket, and pot, and connecting member for an upright member, a locking means is preferably provided to prevent rotation and collapse of the upright member under the weight of foliage etc supported thereby. The upright member may be telescopically extendable, instead of comprising sections which may be fitted end to end to extend the upright member.

A preferred embodiment of apparatus for supporting stems and foliage of growing plants, according to the invention will now be described by way of example with reference to the accompanying drawings wherein:-
Fig. 1 is a partially cross-sectional side elevation of an embodiment of plant support apparatus accordingly to the invention;
Fig. 2 is a plan view of the apparatus of Fig 1;
Fig. 3 is a side elevation view of the apparatus from the direction of arrow III in Fig 2;
Fig. 4 is a view similar to Fig 1 of a variant of the apparatus according to the invention;
Fig. 5 is a plan view of the apparatus of Fig 4,
Fig. 5a is a cross-sectional view on line A-A of Fig 5,
Fig. 6 is a detail view showing an embodiment of securing means for anchoring part of the plant to the apparatus; and
Fig 7 is a second embodiment of such securing means.

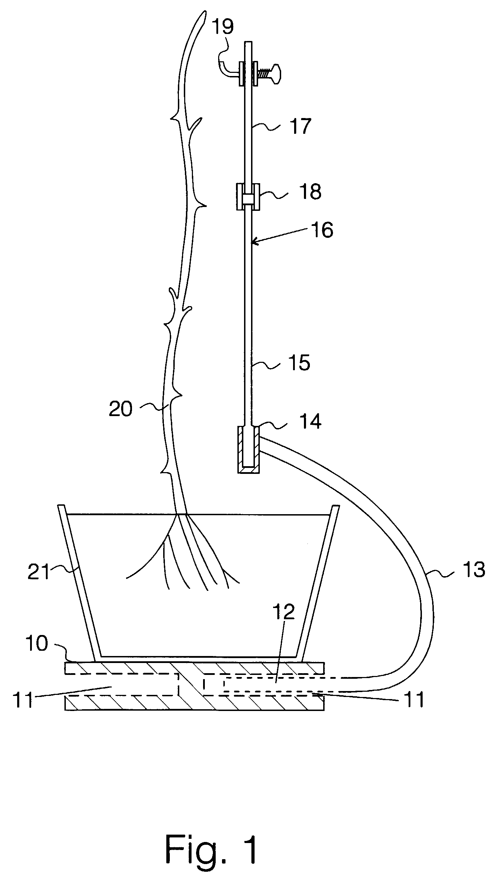

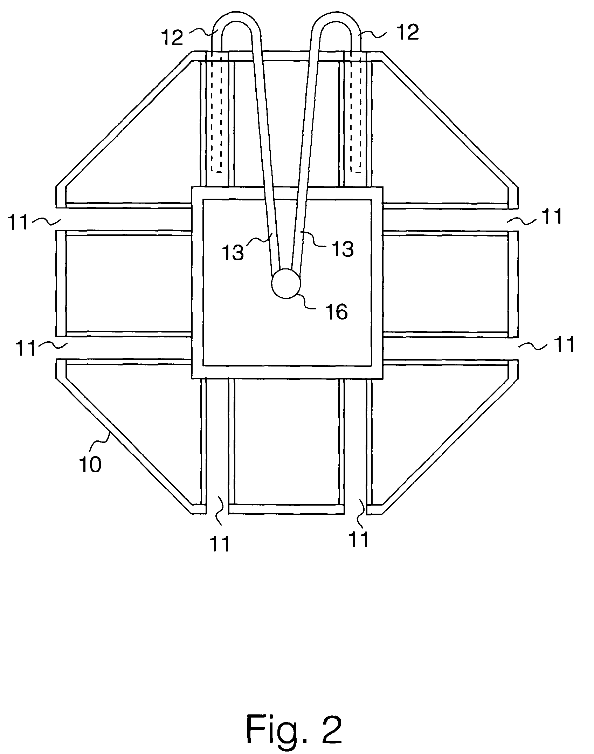

Referring to Figs 1, 2 and 3, the first embodiment of apparatus according to the invention comprises an octagonal base 10 for placing horizontally on the ground or other support surface. The base 10 has a plurality of sockets 11 extending into the base, parallel to the major surfaces of the base, and the support surface. The base 10 is a regular octagon in plan view (Fig 2) and two sockets 11 extend parallel into the base from each of alternate sides.

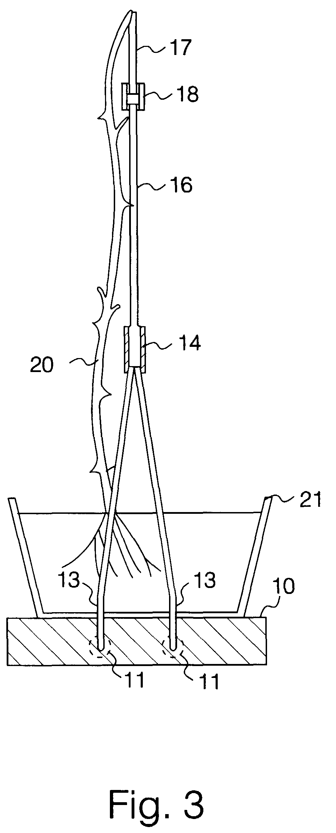

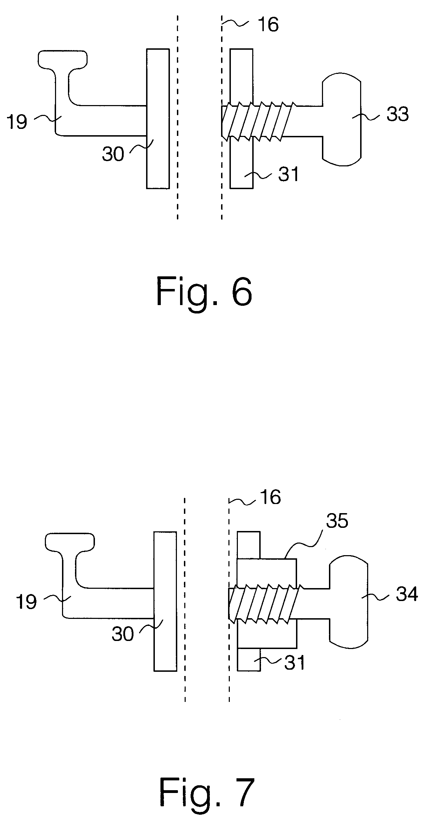

The end portions 12 of two connecting members 13 are received in the parallel sockets 11 of one side of the base 10, and the connecting members 13 are connected at their respective upper ends, to carry a socket 14 (Fig 3). Socket 14 carries the lower end of a rod section 15, which forms part of an upright member 16, and is connected to a further rod-section 17 by a connector 18. This upright member 16 carries one or more securing means 19 (see Figs 6 and 7) or ties for securing suitable parts of the stems or foliage of a plant 20 to the upright member 16.

As can be seen best from Fig 1, the connecting member 13 is formed as a curved member which extends upwardly from the edge of the base, and inwardly over the base 10, so that a pot 21 or other container can be placed on the base 10 without interference from the connecting member 13, yet the upright member 16 can be carried to extend substantially vertically above the pot 21, approximately over the centre of the pot 21 so that plant 20 may be trained to be supported by member 16 without sensible deviation from normal upright growth. It will be noted that no part of the base 10 upright 16 or connecting member 13 enters the pot 21 or any growing medium in the pot, nor interferes in any way with the root system of plant 20.

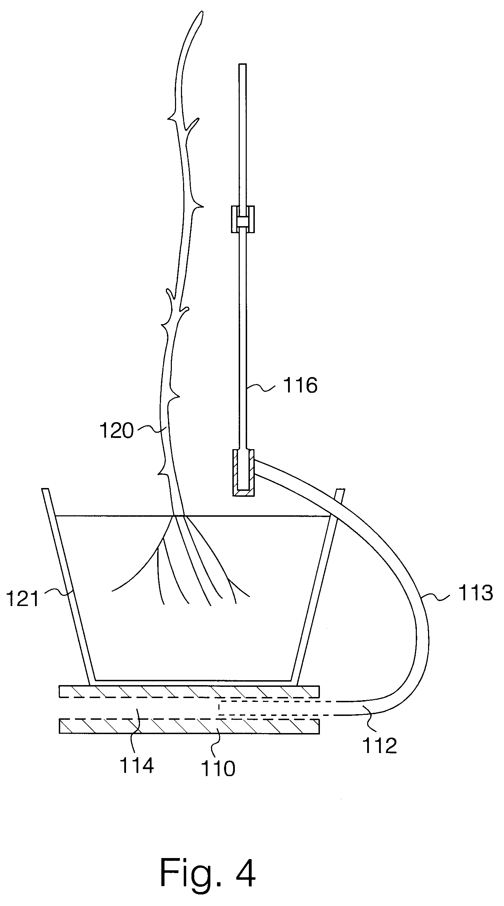

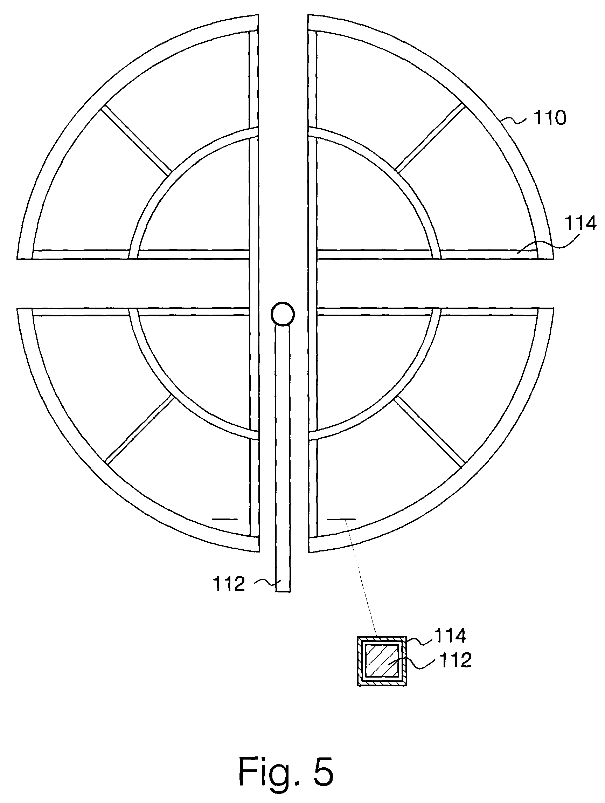

The embodiment of Figs 4 and 5, differs from the first embodiment in that it comprises a circular flat base 110, with sockets 114 arranged at right angles extending radially of the base in a cruciform array. As shown in Fig 5a, the sockets 114 are of square tubular cross-section, to receive a square cross-section end 112 of a single connecting member 113, and prevent its rotation relative to the base.

Connecting member 113 curves inwardly over the base so that its upper end is carried over the approximate centre of the base, with a clearance to allow a pot 121 or other container to be placed on the base. The upper end of connecting number 113 carries a socket for receiving an upright member 116 which extends vertically above the 110 and the pot 121. The stem or other suitable growth parts of the plant 120 may be supported by the upright member 116 by means of string or wire ties, hooks or clamps etc.

Figs 6 and 7 show two forms of foliage anchor 30. These each comprise a cylindrical sleeve 31, large enough to be moved freely up and down the upright member 16, 116, and a hook or anchor 32 carried by the sleeve 31. The Fig 6 foliage anchor uses a spring loaded pin 33 to press against the member 16, 116 to hold the anchor, the pin being released by being pulled out against the force of the spring.

In Fig 7 the anchor is held by a threaded screw 34 which runs in a counter threaded bush 35 carried by the sleeve.

In use, the pot 21, 121 or other container is placed on the base 10, 110, and the ends 12, 112 the appropriate number of connectors 13, 113 are inserted into respective sockets 14, 114, so that the upright number(s) 16, 116 is in the most appropriate position in relation to the stems and foliage to be supported. The number and configuration of the support structure accompanied by the connectors 13, 113 and upright numbers 16, 116 is selected depending upon the weight and size of the foliage being supported

The size, shapes and configuration of the parts may be varied as required, for plants of differing sizes and growth characteristics eg whether predominantly single stem, multi stem, branching etc. The connector 13, 113 may be arcuate, bowed, or formed of plurality of straight sections for example, and this shape may depend upon the size and shape of the pot or other container intended to be used with it.

The base 10, 110, can be an open framework as shown, with the sockets 14, 114 accommodated by hollow open ended tubes, or solid, and may be of metal, wood or plastic as required. The base may be composed of rail members, and the members 13 may be secured to respective rails by clips or clamps. The member 13 may be fixed to the base, and the upper part include an extensible, e.g. telescopic section to adjust the position of the upright part with respect to the plant container.

## Claims

1. Apparatus for training and supporting the stems and foliage of plants growing in pots or like containers, comprising a base upon which a pot or container may be placed, a substantially upright member for supporting the stems and foliage of a plant growing in the container, characterised in that the upright member(16,116) is supported to extend directly above the container (20,120) in the desired plane by means of a connecting part (13, 113) which extends up from a side of the base(10, 110) and inwardly over the container.

2. Apparatus according to claim 1, characterised in that the upright member(16,116) comprises a plurality of sections connectable end to end to match the height or expected height of growth of the plant.

3. Apparatus according to claim 1, characterised in that the upright member (16, 116) comprises a telescopically extendable set of tubular rods.

4. Apparatus according to claim 1, characterised in that the base (10, 110) is provided with at least one horizontal passage to provide one or more (11, 111) to receive the end parts(12, 112) of respective connecting member(13, 113).

5. Apparatus according to claim 4, characterised in that said sockets (11) are arranged in parallel pairs, to receive the ends (12) of two connecting members(13) both connected to a common upright member(16, 116).

6. Apparatus according to claim 4, characterised in that said sockets(111) are non-circular in cross-section, and the associated ends (112) are designed, to prevent rotation of the connecting members in the sockets.

7. Apparatus according to claim 6 wherein the sockets (111) and associated ends are of matching cross-sections.

8. Apparatus according to any preceding claim, characterised in that the end parts(12, 112)are slidable adjustable in position within said sockets(11, 111).

9. Apparatus according to any preceding claim, characterised in that said upright member(16, 116) carries one or more foliage anchors(30) adapted to be adjustable in position in the upright member, and retainable in a selected position by retaining means (33) or (34).
